# EUROPÄISCHE PATENTANMELDUNG

(11) **EP 1 106 571 A1**
(43) Veröffentlichungstag der Anmeldung: **13.06.2001**
(21) Anmeldenummer: 00122775.0
(22) Anmeldetag: 19.10.2000
(51) Int. Cl.: C01B 3/58, H01M 8/06, C10K 3/04

(54) **Vorrichtung zur selektiven katalytischen Oxidation von Kohlenmonoxid**

(30) Priorität: 03.12.1999 DE 19958404
(71) Anmelder: XCELLSIS GmbH, 73230 Kirchheim/Teck-Nabern (DE)
(72) Erfinder: Benz, Uwe, 88690 Uhldingen-Mühlhof (DE); Hassert, Alexandra, 73117 Wangen (DE); Lippert, Marco, 89346 Bibertal-Bühl (DE); Schäfer, Martin, 73230 Kirchheim-Teck (DE); Schüssler, Martin, Dr., 89073 Ulm (DE); Strobel, Barbara, 89160 Dornstadt (DE); Strohmaier, Manfred, 73230 Kirchheim/Teck-Jesingen (DE); Süss, Alexander, 73277 Owen (DE); Süssemilch, Frank, 73230 Kirchheim (DE); Wolfsteiner, Matthias, 73230 Kirchheim (DE); zur Megede, Detlef, Dr., 73230 Kirchheim/Teck (DE)
(74) Vertreter: Kocher, Klaus-Peter Dipl.-Phys

(57) **Zusammenfassung**

Die Erfindung betrifft eine mehrstufige Vorrichtung zur selektiven katalytischen Oxidation von in einem wasserstoffreichen Gasgemischstrom enthaltenen Kohlenmonoxid, wobei jede Stufe (1,2,3) zumindest einen CO-Oxidationsraum (1.1,2.1,3.1) aufweist, wobei einzelne Stufen kühlbar sind, und wobei jeder Stufe eingangsseitig ein oxidierendes Medium (1.3,2.3,3.3) zudosierbar ist, wobei die Vorrichtung zumindest drei gekühlte Stufen zur CO-Oxidation aufweist, wobei für die ersten beiden Stufen eine gemeinsame Kühleinrichtung (12,2.2,13,1.2,14) und für die dritte Stufe eine davon unabhängige Kühleinrichtung (3.2) vorgesehen ist.

## Beschreibung

Die Erfindung betrifft eine Vorrichtung zur selektiven katalytischen Oxidation von Kohlenmonoxid gemäß dem Oberbegriff des unabhängigen Anspruchs.

Aus der gattungsgemäßen DE 195 44 895 C1 ist ein Verfahren und eine Vorrichtung zur selektiven katalytischen Oxidation von Kohlenmonoxid bekannt. Dort wird vorgeschlagen, das oxidierende Gas an mehreren Stellen längs des Gasgemischströmungsweges mit einer jeweils gesteuerten oder geregelten Durchflußmenge einzuleiten. Außerdem wird vorgeschlagen, den Gasgemischstrom durch im Eingangsbereich des CO-Oxidationsreaktors angeordnete statische Mischerstrukturen passiv zu kühlen. Diese Beeinflußbarkeit der exothermen CO-Oxidation längs des Reaktorweges erlaubt eine an die jeweilige Situation abstimmbare Prozeßführung. Eine bevorzugte Verwendung betrifft die Verwendung zur Wasserstoffgewinnung durch Methanolreformierung für brennstoffzellengetriebene Kraftfahrzeuge.

Der Erfindung liegt die Aufgabe zugrunde, eine Vorrichtung anzugeben, die eine optimierte Nutzung verfügbarer thermischer Energie im System erlaubt und die für den dynamischen Einsatz in einem brennstoffzellengetriebenen Fahrzeug geeignet ist.

Diese Aufgabe wird bei einer gattungsgemäßen Vorrichtung gemäß Anspruch 1 durch die Merkmale im kennzeichnenden Teil des Anspruchs gelöst.

Erfindungsgemäß weist die Vorrichtung zumindest drei gekühlte Stufen zur CO-Oxidation auf, wobei für die ersten beiden Stufen eine gemeinsame Kühleinrichtung und für die dritte Stufe eine davon unabhängige Kühleinrichtung vorgesehen ist. Dabei ist die dritte Stufe als Kombinationsreaktor ausgebildet, wobei ein Reaktionsraum zur CO-Oxidation und ein Kühlraum zur Reformierung eines wasserstoffreichen Mediums vorgesehen ist.

Vorzugsweise sind die ersten beiden Stufen als beschichtete Wärmetauscher ausgebildet. Der Vorteil liegt darin, daß der Prozeß in den ersten beiden Stufen bei relativ hohem Temperaturniveau abläuft, so daß die dabei gewonnene thermische Energie weiter im System, vorzugsweise bei Verdampfern und/oder Reformern, genutzt werden kann. Hinzu kommt, daß die notwendige Katalysatormasse bei der CO-Entfernung verringert werden kann, da im Bereich der hohen Temperaturen eine hohe chemische Aktivität zu verzeichnen ist.

Bevorzugt ist zusätzlich eine ungekühlte vierte Stufe vorgesehen, welche zweckmäßigerweise als Rohrreaktor ausgebildet ist.

Besonders vorteilhaft ist, zwischen der zweiten und der dritten Stufe einen Wärmetauscher anzuordnen. Mit diesem kann die die Eintrittstemperatur des CO-haltigen, wasserstoffreichen Gasgemischs in die dritte Stufe eingestellt werden.

Günstig ist, als Wärmetauschermedium des Wärmetauschers zwischen der zweiten und dritten Stufe einen im System bereits vorkommenden Medienstrom vorzusehen.

In einer zweckmäßigen Ausgestaltung sind zur Zudosierung des oxidierenden Mediums in allen Stufen Mittel zur Regelung vorgesehen.

In einer weiteren zweckmäßigen Ausgestaltung sind zur Zudosierung des oxidierenden Mediums in den ersten drei Stufen Mittel zur Regelung vorgesehen, während in der vierten Stufe das oxidierende Medium über eine Bypassleitung passiv dosierbar ist.

Die erfindungsgemäße Anordnung bietet den Vorteil, daß die einzelnen Stufen sehr kompakt und platzsparend und kostengünstig gebaut werden können. Bei der Kühlung der Stufen gewonnene thermische Energie kann im Brennstoffzellensystem anderweitig eingesetzt werden, so daß der Wirkungsgrad des Brennstoffzellensystems verbessert wird. Weiterhin kann durch eine mehrstufige Anordnung, besonders durch die bevorzugte ungekühlte vierte Stufe, die Reiheit des wasserstoffreichen Gasgemischs auch im dynamischen Betrieb verbessert werden

Weitere Vorteile und Ausgestaltungen der Erfindung gehen aus den weiteren Ansprüchen und der Beschreibung hervor.

Die Erfindung ist nachstehend anhand einer Zeichnung näher beschrieben, die eine besonders bevorzugte Anordnung der erfindungsgemäßen Vorrichtung zeigt.

Die Erfindung ist besonders für Brennstoffzellensysteme geeignet, welche in Fahrzeugen eingesetzt werden.

In einem brennstoffzellenbetriebenen Fahrzeug mit mobiler Gaserzeugung entsteht wasserstoffreiches Reformat mit einem CO-Gehalt, welcher von der Brennstoffzelle nicht toleriert wird, da die verwendeten Katalysatoren durch den CO-Gehalt unbrauchbar gemacht werden.

Bevor das Reformat der Brennstoffzelle zugeführt werden kann, muß das CO möglichst selektiv aus dem Reformat entfernt werden. Dabei soll der Energiehaushalt des Systems vorzugsweise so ausgeglichen sein, daß möglichst wenig Verlustwärme entsteht.

Die Reaktion zur CO-Entfernung ist stark exotherm so daß viel Abwärme anfällt.

Erfindungsgemäß wird ein mindestens dreistufiges Gasreinigungsystem vorgeschlagen, welches sehr kompakt aufgebaut ist und ein vorteilhaft platzsparendes Gasreinigungsystem ergibt, welches besonders günstig in einem brennstoffzellenbetriebenen Fahrzeug eingesetzt werden kann.

Ein bevorzugtes System weist vier Stufen zur CO-Entfernung auf. Falls keine hohen Anforderungen an die Dynamik des Systems gestellt werden, kann auf die vierte Stufe auch verzichtet werden.

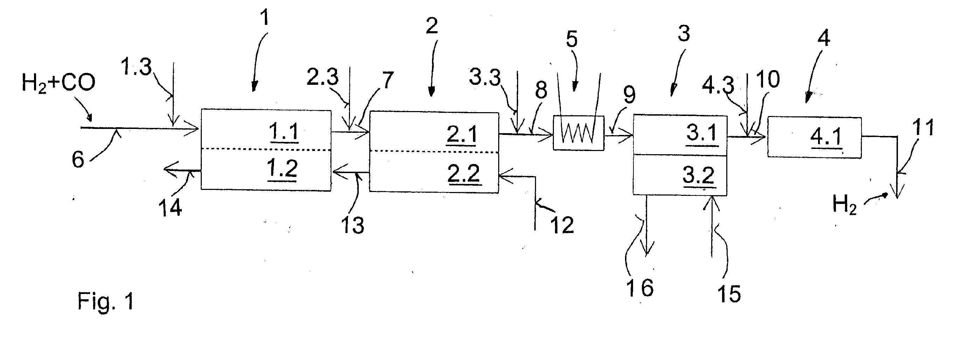

In der Figur ist ein besonders bevorzugtes vierstufiges Gasreinigungssystem dargestellt. Eine erste Stufe 1 weist eine CO-Oxidationseinheit 1.1 und eine Kühleinrichtung 1.2, eine zweite Stufe 2 eine CO-Oxidationseinheit 2.1 und eine Kühleinrichtung 2.2, eine dritte Stufe 3 eine CO-Oxidationseinheit 3.1 und eine Kühleinrichtung 3.2 und eine vierte Stufe 4 eine CO-Oxidationseinheit 4.1 auf. Zwischen der zweiten und der dritten Stufe 2, 3 ist ein Wärmetauscher 5 vorgesehen.

Ein wasserstoffreiches, mit CO verunreinigtes Reformat, im weiteren als H₂+CO bezeichnet, welches in einem nicht dargestellten Reformer erzeugt wird, wird über eine Zuleitung 6 zum Eingang der ersten Stufe 1 eingeleitet, vom Ausgang der ersten Stufe 1 über eine Leitung 7 in den Eingang der zweiten Stufe 2, vom Ausgang der zweiten Stufe 2 über eine Leitung 8 zum Eingang des Wärmetauschers 5, vom Ausgang des Wärmetauschers 5 über eine Leitung 9 zum Eingang der dritten Stufe 3, vom Ausgang der dritten Stufe 3 über eine Leitung 10 zum Eingang der vierten Stufe 4 eingeleitet und vom Ausgang der vierten Stufe 4 als gereinigtes Gas H2 über eine Leitung 11 einer nicht dargestellten Brennstoffzelle zugeführt.

Jede der vier Stufen 1, 2, 3, 4 weist eine Zudosiereinrichtung zur Zufuhr eines oxidierenden Mediums, insbesondere Luft, auf, wobei jeweils zustromseits der ersten Stufe 1 eine Zudosiereinrichtung 1.3, zustromseits der zweiten Stufe 2 eine Zudosiereinrichtung 2.3, zustromseits der dritten Stufe 3 eine Zudosiereinrichtung 3.3 und zustromseits der vierten Stufe 4 eine Zudosiereinrichtung 4.3 angeordnet ist.

Stufe 1 und Stufe 2 sind mit einem gemeinsamen Kühlkreislauf 12, 2.2, 13, 1.2, 14 verbunden, wobei ein Kühlmedium in einer Leitung 12 dem Eingang der Kühleinrichtung 2.2 der zweiten Stufe 2 zugeführt ist, vom Ausgäng des Kühlraums 2.2 der zweiten Stufe 2 über eine Leitung 13 dem Eingang der Kühleinrichtung 1.2 der ersten Stufe 1 zugeführt und durch den Ausgang der Kühleinrichtung 1.2 aus der ersten Stufe 1 über eine Leitung 14 abgeführt wird. Das Kühlmedium durchströmt den Kühlkreislauf 12, 2.2, 13, 1.2, 14 im Gegenstrom zum Reformat H₂+CO.

Vorzugsweise setzen sich die ersten beiden Stufen 1, 2 jeweils aus einem katalytisch beschichteten Wärmetauscher als CO-Oxidationseinheit 1.1, 1.2 und einem gemeinsamen Kühlkreislauf aus mit Thermoöl durchströmten Kühlräumen 1.2, 2.2 zusammen. Vorzugsweise liegt die Thermoöltemperatur zwischen 200°C und 350°C, besonders bevorzugt zwischen 250°C und 300°C. Günstigerweise sind die CO-Oxidationseinheiten 1.1, 2.1 der beiden Stufen 1, 2 als Plattenreaktoren ausgebildet, welche mit einem Edelmetallkatalysator beschichtet sind, vorzugsweise Platin.

Die dritte Stufe 3 ist vorzugsweise als Kombinationsreaktor ausgebildet, wobei die CO-Oxidationseinheit 3.1 mit der Kühleinrichtung 3.2 gekoppelt ist. Die Kühleinrichtung 3.2 ist unabhängig von der Kühleinrichtung der ersten beiden Stufen 1, 2.

Dabei sind in der dritten Stufe 3 zweckmäßigerweise Reaktions-und Kühlräume durch parallel geführte Rohre und/oder Plattenräume gebildet.

Die Kühleinrichtung 3.2 ist vorzugsweise ein Reformer, in dem eine endotherme Reaktion abläuft, die von der Abwärme der exothermen CO-Oxidation in 3.1 unterstützt wird. Das Kühlmedium strömt über eine Leitung 15 in die Kühleinrichtung 3.2 und verläßt diese über eine Leitung 16. Auch hier strömt das Kühlmedium gegensinnig zum Reformat H₂+CO. In diesem Fall wird die Leitung 16 zweckmäßigerweise direkt oder indirekt mit der Leitung 6 verbunden. Die Kühleinrichtung 3.2 fungiert dann als der Vorrichtung vorgeschalteter Reformer.

Als Kühlmedien für die Kühleinrichtung 3.2 der dritten Stufe 3 sind weiterhin auch sonstige gasförmige und/oder flüssige Medien geeignet, wie Wasser und/oder Wasser/Glykol-Gemisch und/oder Luft und/oder Kathodenabgas und/oder Anodenabgas und/oder andere Medien, welche im bereits im Brennstoffzellensystem vorkommen und geeignet sind, ausreichend thermische Energie aufzunehmen.

Vorzugsweise wird Edelmetallkatalysator-Material, besonders bevorzugt Platin, eingesetzt wobei Wärmeübertragungsflächen der Anordnung beschichtet sind und/oder mit Katalysator beschichtete und/oder getränkte Mischelemente wie Geflechte, Vliese, Pellets und dergleichen verwendet werden.

Bevorzugt ist die CO-Oxidationseinheit 3.1 der dritten Stufe 3 in Plattenbauweise ausgeführt. Es können jedoch auch parallel geführte Rohre, welche mit katalysatorbeschichteten Mischelementen gefüllt sind, verwendet werden. Zur Kühlung werden diese Rohre zweckmäßigerweise mit Rohren vorzugsweise geringeren Durchmessers umwickelt und gegebenenfalls verlötet. Vorteilhaft können Kupferrohre für diese Kühlanordnung 3.2 verwendet werden.

In der bevorzugten Anordnung gemäß der Figur ist die vierte Stufe 4 ungekühlt. Es kann jedoch auch eine Kühlung der vierten Stufe 4 vorgesehen sein. Falls die Ansprüche an die Dynamik des Brennstoffzellensystems nicht hoch sind, kann auch auf die vierte Stufe 4 verzichtet werden.

Die vierte Stufe 4 ist vorteilhaft als Rohrbündelreaktor ausgebildet, welcher mit beschichteten Mischelementen gefüllt ist. Günstig ist ein edelmetallhaltiger Katalysator.

In dem Wärmetauscher 5 zwischen der zweiten Stufe 3 und der dritten Stufe 3 wird günstigerweise ein Wärmetauschermedium eingesetzt, welches durch einen bereits im Brennstoffzellensystem vorkommenden Medienstrom mit geeignetem Temperaturniveau gebildet wird. Mit Hilfe des Wärmetauschers 5 kann die Eintrittstemperatur des vorgereinigten Reformats H₂+CO eingestellt werden. Üblicherweise wird als Wärmetauscher ein Zwischenkühler eingesetzt, um die Eintrittstemperatur weiter abzusenken.

Auf den Wärmetauscher 5 kann bei geeigneter Systemauslegung bzw. nach Bauart und/oder Anforderung an die dritte Stufe 3 optional auch verzichtet werden.

Die Zudosierung des oxidierenden Mediums in die einzelnen Stufen 1, 2, 3, 4 muß nicht in die Zuleitungen 6, 7, 8, 9, 10 hinein, sondern kann auch direkt in die CO-Oxidationseinheiten 1.1, 2.1, 3.1, 4.1 der Stufen 1, 2, 3, 4 hinein erfolgen.

In einer vorteilhaften Ausgestaltung der Anordnung kann die Zudosierung des oxidierenden Mediums durch eine integrierte Dosiereinrichtung erfolgen, wobei in der ersten Stufe 1 eine Zudosierung für die zweite Stufe 2 und/oder in der zweiten Stufe 2 eine Zudosierung für die dritte Stufe 3 und/oder in der dritten Stufe 3 eine Zudosierung für die vierte Stufe 4 vorgesehen ist. Das oxidierende Medium, vorzugsweise Sauerstoff, für die jeweils auf eine vorausgehende Stufe folgende Stufe wird vorzugsweise mit Hilfe einer Sonde in einen Abführkanal für den Gasgemischstrom der vorausgehenden Stufe eingebracht. Im einfachsten Fall ist die Sonde als rohrförmige Leitung mit beliebigem Querschnitt ausgebildet. Da das oxidierende Medium in den Abführkanal der vorausgehenden Stufe eingebracht wird, steht er für die Reaktion in dieser vorausgehenden Stufe nicht zur Verfügung. Das oxidierende Medium kann sich vielmehr innerhalb dieses Abführkanals mit dem Gasgemischstrom aus der vorangehenden Stufe vermischen. Da der Abführkanal der vorangehenden Stufe gleichzeitig als Zuführkanal für die folgende Stufe dient, wird somit dem oder den Reaktionsräumen der folgenden Stufe ein homogenes Reformat/Sauerstoffgemisch zugeführt. Auf zusätzliche externe Misch- oder Verteilungsstrukturen kann daher verzichtet werden.

Sofern ausreichende Kapazität verfügbar ist, ist es günstig, für alle Zudosiereinrichtungen 1.3, 2.3, 3.3, 4.3 jeweils eine Regelung vorzusehen, um die Zugabe des oxidierenden Mediums in die Stufen 1, 2, 3, 4 zu regeln. Um Kapazität zu sparen, können auch Mittel zur Regelung der Zudosiereinrichtungen 1.3, 2.3, 3.3 vorgesehen sein und die Zudosierung 4.3 in die vierte Stufe 4 über eine Bypass-Leitung erfolgen, wobei sich die Menge des zudosierten Mediums pässiv einstellt.

Die Reformatreinigung in den ersten beiden Stufen 1, 2 erfolgt bei relativ hoher Temperatur zwischen 200°C und 350°C, bevorzugt zwischen 250°C und 300°C. Die dabei gewonnene thermische Energie kann in anderen Komponenten des Brennstoffzellensystems, wie etwa Verdampfer und/oder Reformer, noch genutzt werden. Da die chemische Aktivität bei höherer Temperatur größer ist als bei niedriger Temperatur, kann Katalysatormaterial eingespart werden. Die Anordnung kann sehr kompakt aufgebaut werden. Bei Verwendung von gasförmigen Kühlmedien in der dritten Stufe 3 kann die dabei gewonnene thermische Energie ebenso in weiteren Komponenten des Brennstoffzellenystems genutzt werden.

## Patentansprüche

1. Mehrstufige Vorrichtung zur selektiven katalytischen Oxidation von in einem wasserstoffreichen Gasgemischstrom enthaltenen Kohlenmonoxid, wobei jede Stufe (1, 2, 3) zumindest einen CO-Oxidationsraum (1.1, 2.1, 3.1) aufweist, wobei einzelne Stufen (1, 2, 3) kühlbar sind, und wobei jeder Stufe (1, 2, 3) eingangsseitig ein oxidierendes Medium zudosierbar (1.3, 2.3, 3.3) ist,
dadurch gekennzeichnet,
daß die Vorrichtung zumindest drei gekühlte Stufen (1, 2, 3) zur CO-Oxidation aufweist, wobei für die ersten beiden Stufen (1, 2) ein gemeinsamer Kühlkreislauf (12, 2.2, 13, 1.2, 14) und für die dritte Stufe (3) eine davon unabhängige Kühleinrichtung (3.2) vorgesehen ist, wobei die dritte Stufe (3) als Kombinationsreaktor ausgebildet ist, dessen Kühlraum (3.2) zur Reformierung eines wasserstoffreichen Mediums ausgebildet ist.

2. Vorrichtung nach Anspruch 1,
dadurch gekennzeichnet,
daß die ersten beiden Stufen (1, 2) als beschichtete Wärmetauscher ausgebildet sind, wobei zur Kühlung der ersten beiden Stufen (1, 2) ein gemeinsamer Ölkreislauf (12, 2.2, 13, 1.2, 14) vorgesehen ist

3. Vorrichtung nach Anspruch 1,
dadurch gekennzeichnet,
daß die dritte Stufe (3) als Reaktor bestehend aus CO-Oxidationsraum (3.1) und Kühlraum (3.2) ausgebildet ist, wobei der wasserstoffreiche Gasgemischstrom auf eine Temperatur unter 200°C kühlbar ist.

4. Vorrichtung nach Anspruch 1,
dadurch gekennzeichnet,
daß zusätzlich eine ungekühlte vierte Stufe (4) vorgesehen ist.

5. Vorrichtung nach Anspruch 1,
dadurch gekennzeichnet,
daß zwischen der zweiten und der dritten Stufe (2, 3) ein Wärmetauscher (5) angeordnet ist.

6. Vorrichtung nach Anspruch 5,
dadurch gekennzeichnet,
daß als Wärmetauschermedium des Wärmetauschers (5) ein im System bereits vorkommender Medienstrom vorgesehen ist.

7. Vorrichtung nach Anspruch 1,
dadurch gekennzeichnet,
daß zur Zudosierung des oxidierenden Mediums (1.3, 2.3, 3.3, 4.3) in allen Stufen (1, 2, 3, 4) Mittel zur Regelung vorgesehen sind.

8. Vorrichtung nach Anspruch 1 und 4,
dadurch gekennzeichnet,
daß zur Zudosierung des oxidierenden Mediums (1.3, 2.3, 3.3) in den ersten drei Stufen (1, 2, 3) Mittel zur Regelung vorgesehen sind und in der vierten Stufe (4) das oxidierende Medium über eine Bypassleitung passiv dosierbar ist.

9. Vorrichtung nach Anspruch 1,
dadurch gekennzeichnet,
daß zumindest die ersten beiden Stufen (1, 2) in Plattenbauweise ausgeführt sind.

10. Vorrichtung nach Anspruch 1,
dadurch gekennzeichnet,
daß zumindest die weiteren Stufen (3, 4) als Rohrbündelreaktoren ausgeführt sind.
